# EUROPEAN PATENT SPECIFICATION

(11) **EP 1 691 187 B1**
(45) Date of publication and mention of the grant of the patent: **20.08.2008**
(21) Application number: 06075702.8
(22) Date of filing: 07.10.2003
(51) Int. Cl.: G01N 1/36, B65D 43/16

(54) **Apparatus and procedure for embedding biological tissues**
Kassette, Apparat und Verfahren zum Einbetten biologischer gewebeproben
Appareil et methode pour l'inclusion de tissues biologiques

(30) Priority: 08.10.2002 HU 0203397; 08.07.2003 HU 0302132
(43) Date of publication of application: 16.08.2006
(62) Divisional of application: 03751068.2
(73) Proprietor: Glasz, Tibor, 1027 Budapest (HU)
(72) Inventor: Glasz, Tibor, 1027 Budapest (HU)
(74) Representative: Varnai, Aniko

(56) References cited:
- EP-A- 0 245 969
- US-A- 3 604 436
- US-A- 4 576 796
- US-A- 5 089 288
- US-A- 5 354 370
- US-A- 5 457 050

## Description

The objects of the invention are an apparatus and a procedure for embedding biological tissues.

A great number of tissue samples of patients are examined for fine structure by laboratories specialised for this work mostly with optical microscope in the practice. The tissue samples are put into cassettes usually made of plastic to avoid confusing.

The closed cassettes are marked with identification numbers and the tissue samples are treated with chemical reagents of predetermined composition, when the characteristics of the tissue change in a predetermined way.

The cassettes are then dipped into an embedding medium (mostly into paraffin) to embed the tissue samples.

The tissue samples are embedded within the hardened embedding medium in this way.

The first function of the embedding medium is to make the tissue sample suitable for preparing sections from it. The second function of the medium is to keep the consistence and characteristics of the tissue sample for a long period of time making the tissue sample suitable to be kept in archives.

The tissue section is made in such a way that the embedding medium with the tissue sample therein is fastened in the vice of a cutting device the so-called microtom and film-like sections are made, which are mounted on the slide and they are suitable for histological examination with optical microscope.

USP 5 457 050 describes an apparatus, which is a chamber for embedding of DNA molecule in agarose and the method of embedding of DNS molecule.

The chamber has two identical halves and at least one retainer sheet, which defines the molding space within the chamber. The retainer is removable after agarose placed in the apparatus has solidified.

This apparatus and method are not suitable for embedding of biological tissues in such a medium as wax or paraffin.

Further disadvantage of the above method is the following: the casting method can be carried out only manually and this apparatus has not any component, which can be used again after the embedding operation.

The document US 3 604 436 describes an automatic tissue processor.

The apparatus, which is described in the document, is suitable for treatment and dehydrating of tissue samples, but is not an embedding apparatus.

It is not possible to prepare embedded tissue sample in paraffin block with this processor.

The document EP 0 245 969 describes an apparatus and method for embedding tissue specimens.

They use an embedding cassette which contains three separate inside chambers: a "base portion", a so called "body portion" and a "separable portion".

After the embedding it is not possible to separate the parts of the cassette in a simple way, but it is necessary to cut out from the paraffin block the part containing the sample.

It is a difficult and unclean method.

The other disadvantage of the above apparatus and method, is that they use one single chamber for a multitude of cassettes to be embedded.

The one common chamber would result in an inevitable and inseparable adherence of the cassettes to one another.

We made experiments to develop an embedding apparatus, where the embedding procedure of the biological tissue samples is continuous and automated.

The usage of this apparatus can increase intensity of embedding and enhance the safety of the work.

We had developed also a special construction of a tissue holding cassette, which can be excellently used in the inventive automatic apparatus and procedure.

We can eliminate the possibilities of errors of the manual tissue handling by the application of the inventive apparatus and we can enhance the efficacy of the embedding process.

We recognise that in the procedure of invention the tissue holding cassette need not be opened before casting. The treatment with reagents and casting with tissue embedding medium can be carried out in the same cassette.

The object of the invention is an apparatus for embedding biological tissue samples in tissue holding cassette.

The embedding apparatus for embedding biological tissue samples in tissue holding cassette comprises two halves of cassette serving a V-form has one or more medium storing tanks connected together, provided with inlet pipe, closing mechanism and heat exchanger, it has one or more casting tanks for receiving said tissue holding cassette, each of casting tanks is provided with heat exchanger, pass openings for inlet of the tissue embedding medium, the casting tanks are placed above the medium storing tanks.

The characteristic features of the embedding apparatus are as follows:
the closing mechanism is positioned inside the medium storing tank and it can stop the inlet of the tissue embedding medium and it has a lifting device to lift out the tissue holding cassette and a separating piece being placed above the casting tank, the separating piece having a cylindrical shape which is adapted to be fitted in to the V-form part of tissue holding cassette to divide it into two halves of cassette, a half of cassette containing the embedded tissue sample and an empty half of cassette.

The embedding apparatus of the invention may provide a tissue holding cassette, which comprises two identically shaped halves of cassette.

The embedding apparatus of the invention may provide a tissue holding cassette, which comprises two differently shaped halves of cassette.

The tissue holding cassette may comprise two identically shaped halves of cassette, where at each half of cassette has side panels of the frame overhang the perforated panel upwards and downwards, - at each half of cassette - the outside front of one of the side panels of frame is a surface including acute angle with the edge of the perforated panel and they are positioned to face each other, serving a V-form.

One of the halves of cassette is provided with a closing element, which can be inserted and which is provided with a stepped flange.

The embedding apparatus may provide with a tissue holding cassette, which comprises two differently shaped halves of cassette.

In this case - at each half of cassette - the outside front of one of the side panels of frame forms a surface including acute angle with the edge of the perforated panel and they are positioned to face each other serving a V-form and the two halves of cassette are joined so, that a cavity formed by the side panels of frame of the upper half of cassette is closed by the perforated panel of the lower half of cassette.

An advantageous embodiment of the embedding apparatus enables to cast simultaneously several tissue holding cassettes if several casting tanks are connected together.

The separating piece serves to open the simultaneously cast tissue holding cassettes either simultaneously or each cassette separately.

The other object of the invention is a procedure for using the inventive embedding apparatus.

According to the inventive procedure the tissue sample is placed into one of the halves of cassette, the fastening insertion is placed thereon, the two halves turned oppositely are joined, the tissue holding cassette is placed into the casting tank, the liquid tissue embedding medium is let into the casting tank through the pass openings, then the flow of the tissue embedding medium is stopped by the closing mechanism (17), then the tissue embedding medium in the tissue holding cassette is hardened.

The characteristic features of the procedure are as follows: each tissue holding cassette is inserted in its casting tank and the embedded tissue holding cassette is lifted to the separating piece which separates it into two halves of cassette, into a half of cassette containing the embedded tissue sample and an empty half of cassette.

The halves of cassette will get into cassette collecting units if desired.
Figure 1 shows the section of the tissue sample holding cassette in the casting tank,
Figure 2 shows the section of the tissue sample holding cassette, which is taken out of the casting tank and opened.
Figure 3 shows axonometric view of the medium storing tank, Figure 4 shows axonometric view of the casting tank, Figure 5 shows axonometric view of the separating piece, Figure 6 shows axonometric view of the assembled embedding apparatus.
Figure 7 shows the axonometric view of the cassette as to be used in the claimed apparatus where the tissue holding cassette comprises two identically shaped halves of cassette.
Figure 8 shows the top view of the half of the above tissue holding cassette as to be used in the claimed apparatus.
Figures 9 and 10 show side views of the half of above tissue holding cassette as to be used in the claimed apparatus.
Figure 11 shows side view of the closing element used in the above tissue holding cassette as to be used in the claimed apparatus.
Figure 12 shows the top view of the lower half of the above tissue holding cassette, which has two differently shaped halves of cassette, as to be used in the claimed apparatus.
Figure 14 shows its rear view and Figure 13 shows its side view.
Figure 15 shows the top view of the upper half of the tissue holding cassette which has two differently shaped halves of cassette as to be used in the claimed apparatus.
Figure 17 shows its rear view and Figure 16 shows its side view.

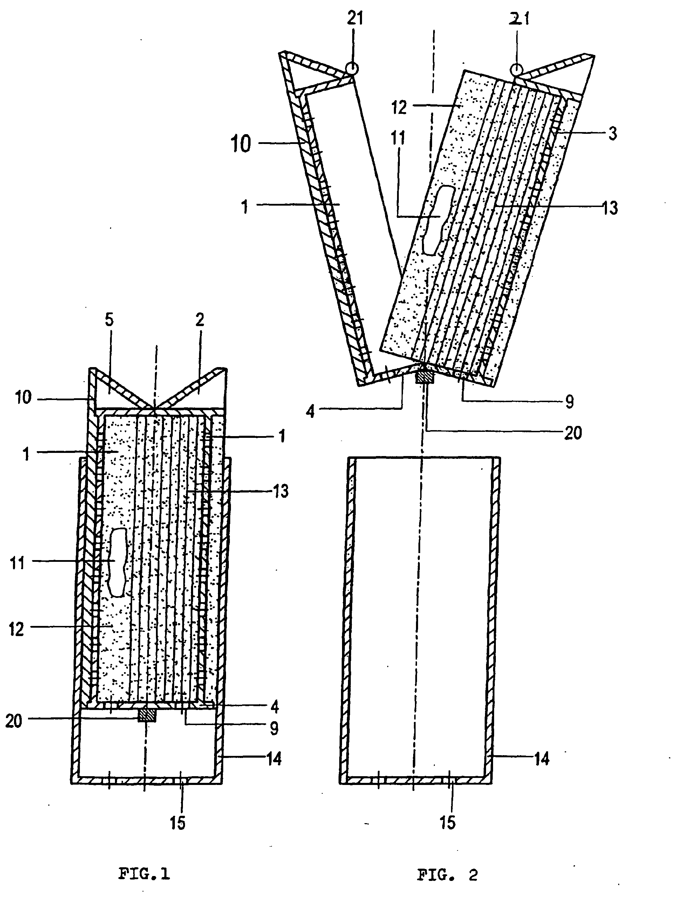

Figure 1 is a front section view, which shows the tissue holding cassette 2, which comprises two identically shaped halves of cassette in closed state in the casting tank 14 of the embedding apparatus.

It seems that a fastening insertion 13, which fastens the position of tissue sample 11, is placed over the perforated panel 3 of the tissue holding cassette 2.

The tissue holding cassette 2 is filled so that the fastening insertion is also cast within the tissue embedding medium 12, which is advantageously paraffin.

One of the side panels of frame 4 of halves of cassette 1 of the tissue holding cassette 2 is including an acute angle.

One of the side panels of frame 4 of a half of cassette 1 of the tissue holding cassette is provided with an inlet opening 9.

A closing element 10 is inserted into one of the halves of cassette 1.

The casting tank 14 is provided with pass openings 15 for inlet of the liquid tissue embedding medium 12.

Actually the embedding apparatus includes several mutually connected casting tanks 14 according to an advantageous embodiment. This enables to fill even several tissue holding cassettes 2 simultaneously with the tissue embedding medium 12.

Figure 2 shows the stage of work wherein the tissue holding cassette 2 has already been lifted out of the casting tank 14 provided with pass openings 15 by the lifting device 20 and its two halves of cassette 1 are being separated by the separating piece 21.

One of the halves of cassette 1 provided with the closing element 10 can be separated from the tissue embedding medium 12. The other half of cassette 1 contains the tissue sample 11 above the perforated panel 3 fastened by the fastening insertion 13 and cast around with the tissue embedding medium 12.

On the halves of cassette the surface including acute angle 5 and the inlet opening 9 on one of the side panels of frame are shown.

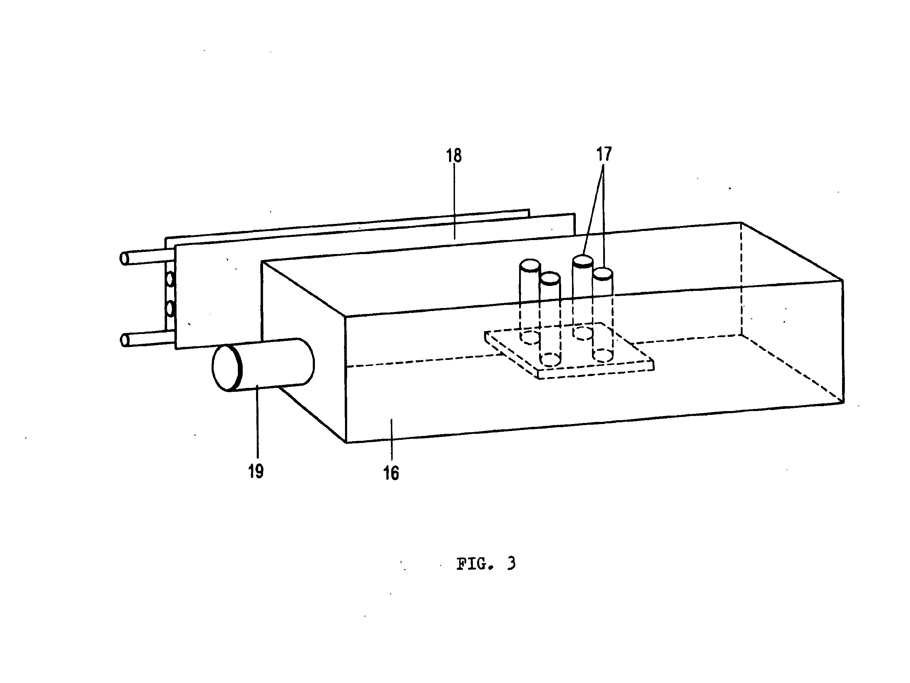

Figure 3, which is an axonometric drawing, shows the medium storing tank 16, which is provided with an inlet pipe 19 and a closing mechanism 17; wich is positioned inside the medium storing tank 16.

The heat exchanger 18 is connected to the medium storing tank 16, which serves to maintain the desired temperature of the tissue embedding medium 12.

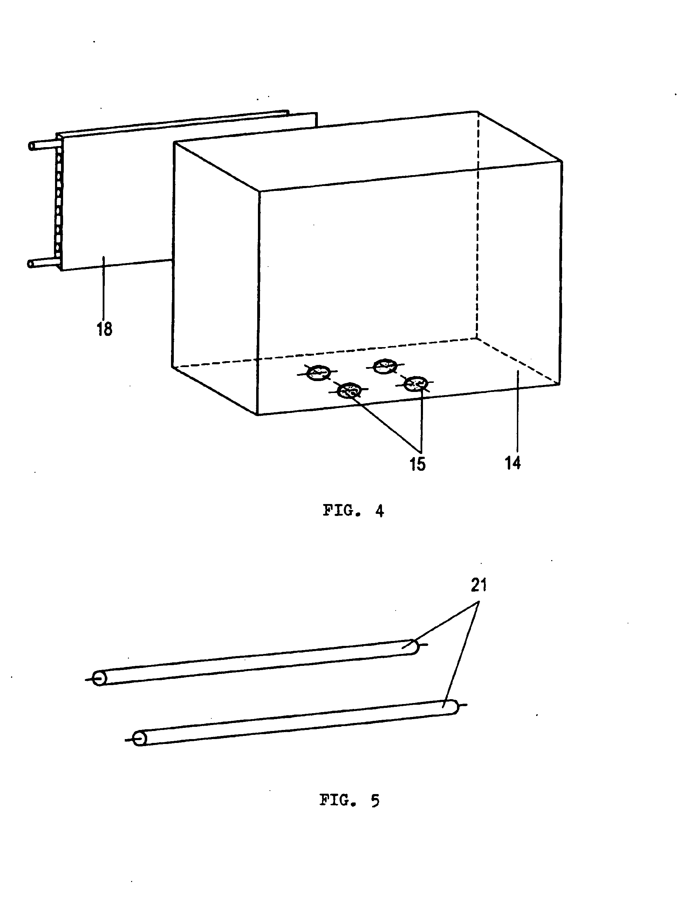

Figure 4 shows the casting tank 14 provided with the pass opening 15.

The tissue embedding medium 12 enters the casting tank 14 through pass openings 15.

The closing mechanism 17 can stop the inlet of tissue embedding medium 12.

The casting tank 14 is also provided with heat exchanger 18.

Figure 5 shows the axonometric drawing of the separating piece 21 having advantageously cylindrical or other shape.

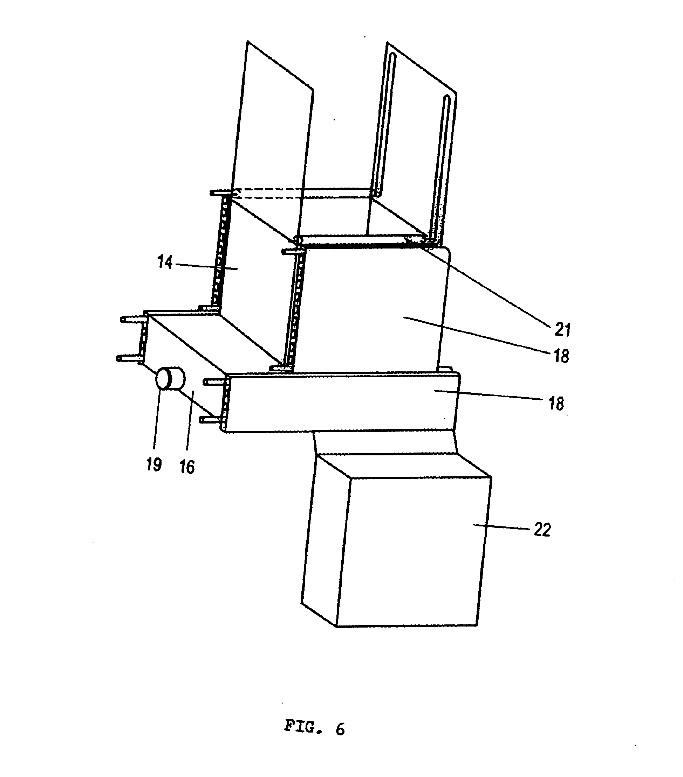

Figure 6 shows axonometric representation of the embedding apparatus wherein the medium storing tank 16 provided with the inlet pipe 19 and the casting tank 14 above it are shown.

Both the medium storing tank 16 and the casting tank 14 are provided with heat exchanger 18.

The cast out tissue holding cassette 2 is divided by the separating piece 21 into two halves of cassette 1. They fall separately into cassette collecting units 22. The half of cassette 1 containing tissue sample 11 and the empty half of cassette 1 can be separated in this way.

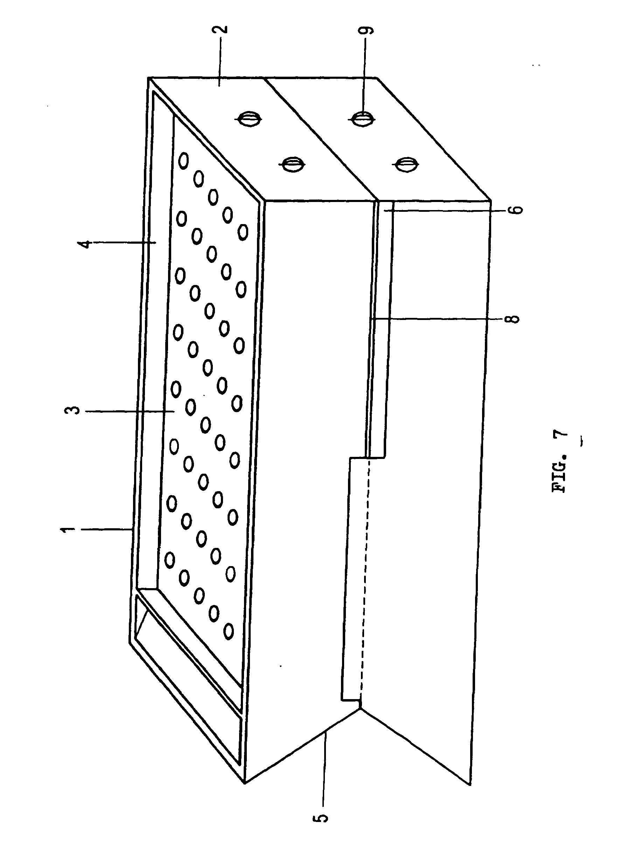

In Figure 7 the tissue sample holding cassette 2 as to be used in the claimed apparatus is built up by turning two identically shaped halves of cassette 1 oppositely to each other.

Both halves of cassette 1 are provided with a perforated panel 3 and a side panel of frame 4, which fit to it.

The side panel of frame 4 overhangs the perforated panel 4 upwards and downwards.

A fitting rib 6 is joined to the side panel of frame 4 and forms steps with the fitting bed 7 shaped on the flange of the side panel of frame 4.

The steps formed by the fitting rib 6 and the fitting bed 7 are shaped oppositely on the two halves of cassette 1.

The inside front surfaces of the side panels of frame 4 forms a rectangle with the edge of the perforated panel 3.

The inside front surfaces of three side panels of frame 4 forms a rectangle with edges of the perforated panel 3 but the outside front surface of one of the side panels of frame 4 includes an acute angle with the edge of the perforated panel 3.

An inlet opening 9 is shaped in one of the side panels of frame 4.

Another embodiment can be constructed according to invention, wherein no separate inlet openings 9 are shaped but the tissue embedding medium 12 is poured in through openings of the perforated panel 3.

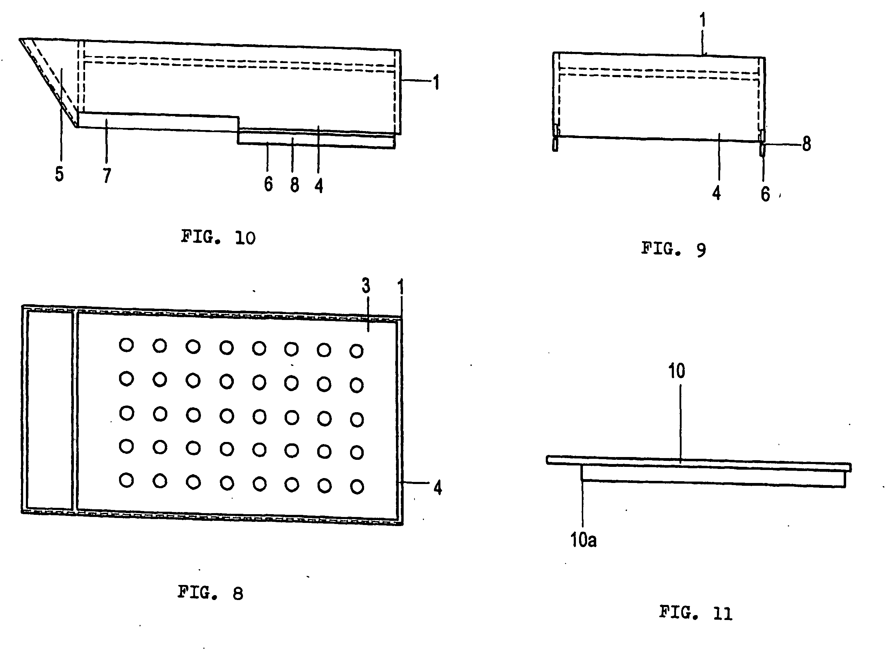

Figure 8 shows a top view of the half of cassette 1 as used in the claimed apparatus where the perforated panel 3 and the side panels of frame 4 fitting to its edges are shown.

Figure 9 shows a side view of the half of cassette 1 as to be used in the claimed apparatus where the fitting rib 6 joined to the side panel of frame 4 of the half of cassette 1.

On the fitting rib 6 a groove 8 is shaped. This groove 8 enables to bend down or to break away the fitting rib 6 when tissue sectioning is made.

Figure 10 shows another side view of the half of cassette 1 as to be used in the claimed apparatus where the surface including acute angle 5, the fitting rib 6 and the fitting bed 7 forming steps are shown.

The fitting rib 6 is provided with a groove 8.

Figure 11 shows a side view of the closing element 10 used in the above embodiment and the closing element 10 which is provided with a stepped flange 10a.

The closing element 10 is attached to the half of cassette 1, which functions as covering piece and from which the tissue embedding medium 12 should be separated. The purpose of this element is namely to inhibit embedding of this half of cassette 1 into the tissue embedding medium 12.

The half of cassette 1 functioning as covering part can be re-used in this way.

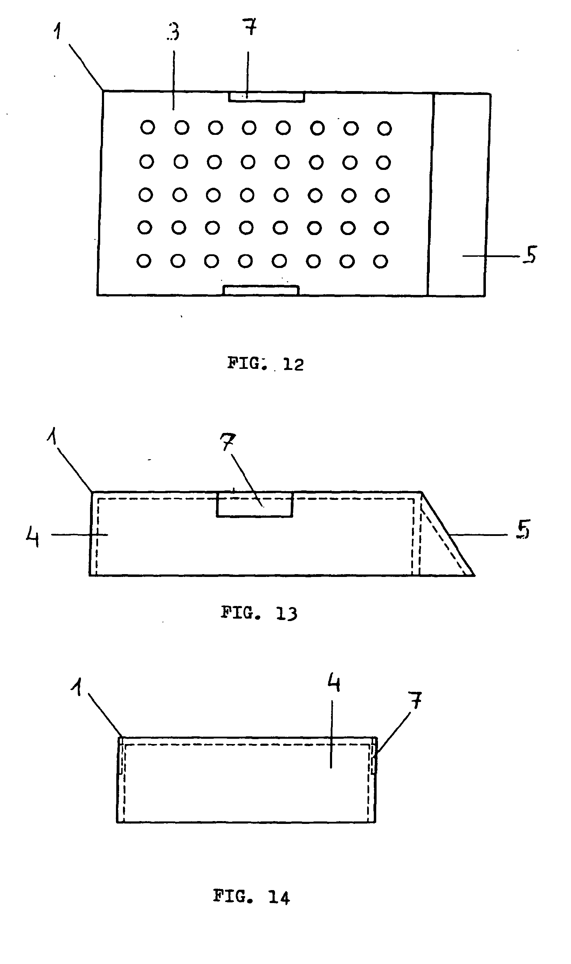

Figure 12 shows the top view of the half of cassette 1 of the tissue holding cassette 2 as to be used in the claimed apparatus consisting of two differently shaped halves of cassette. It serves as lower part.

This half of cassette 1 is provided with a perforated panel 3 and side panels of frame 4, which fit to and overhang the perforated panel 3 only in one direction.

A fitting bed 7 is shaped on the side panel of frame 4, which receives a fitting claw 6a shaped on the half of cassette 1 serving as upper part.

The outside front surface of one of side panels of frame 4 is connected with the surface including acute angle 5.

Figure 14 shows the side panel of frame 4 of the half of cassette 1 - according to embodiment of Figure 12 serving as lower part - and the fitting bed 7 shaped thereon.

Figure 13 shows the side panel of frame 4 of the half of cassette 1 as to be used in the claimed apparatus serving as lower part, the fitting bed 7 shaped thereon and the surface including acute angle 5 connected to the edge of the perforated panel 3.

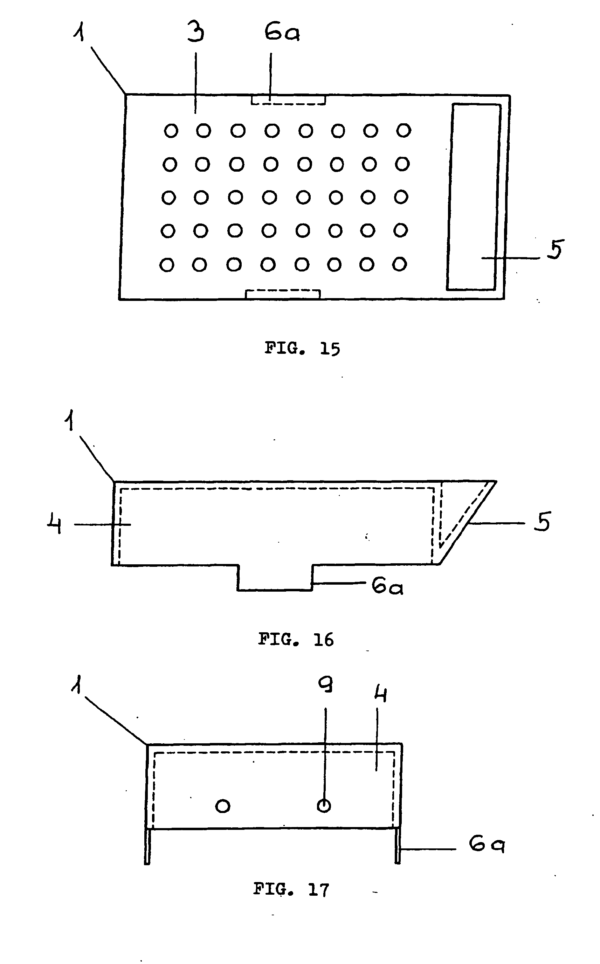

Figure 15 shows the upper half of cassette 1 of tissue holding cassette 2 as to be used in the claimed apparatus having two differently shaped halves.

It is provided with a perforated panel 3 and a side panel of frame 4 connected to the perforated panel 3 and overhanging it only in one direction.

The side panel of frame 4 is provided with a fitting claw 6a and the outside surface of one of side panels of frame 4 forms a surface including acute angle 5 with the edge of the perforated panel 3.

Figure 17 shows the rear view of the mentioned upper half of cassette 1 as to be used in the claimed apparatus, the side panel of frame 4 thereof is provided with inlet openings 9.

The scope of invention includes also an embodiment, wherein no inlet opening 9 is shaped in the side panel of frame 4 but the openings of the perforated panel 3 serve as inlet openings.

Figure 16 shows the side view of the upper half of cassette 1 of tissue holding cassette 2 as to be used in the claimed apparatus having two differently shaped halves.

In this upper half of cassette 1 the side panel of frame 4 is provided with a fitting claw 6a and the front surface of the side panel 4 forms the surface including acute angle 5 with the edge of the perforated panel.

The advantages of the inventive embedding apparatus and procedure are the followings.

The apparatus according to the invention is applicable for an automated casting procedure. The embedding procedure is faster and safer.

It is possible to decrease or eliminate the errors of the manual tissue handling and to enhance the efficacy of the embedding process by the application of the inventive apparatus.

The advantage of the inventive procedure is that the tissue holding cassette need not be opened before casting. The treatment with reagents and casting of the biological tissue in a medium can be carried out in the same cassette.

In the inventive embedding procedure is possible to cast any number of cassettes simultaneously.

### LIST OF REFERENCES

- 1: half of cassette
- 2: tissue holding cassette
- 3: perforated panel
- 4: side panel of frame
- 5: surface including acute angle
- 6: fitting rib
- 6a: fitting claw
- 7: fitting bed
- 8: groove
- 9: inlet opening
- 10: closing element
- 10a: stepped flange
- 11: tissue sample
- 12: tissue embedding medium
- 13: fastening insertion
- 14: casting tank
- 15: pass opening
- 16: medium storing tank
- 17: closing mechanism
- 18: heat exchanger
- 19: inlet pipe
- 20: lifting device
- 21: separating piece
- 22: cassette collecting unit

## Claims

1. Embedding apparatus for embedding biological tissue samples in tissue holding cassette (2) comprising two halves of cassette serving a V-form, which has one or more medium storing tanks (16) connected together, provided with inlet pipe (19), closing mechanism (17) and heat exchanger (18), it has one or more casting tanks (14) for receiving said tissue holding cassette (2), each of casting tanks (14) is provided with heat exchanger (18), pass openings (15) for inlet of the tissue embedding medium (12), the casting tanks (14) are placed above the medium storing tanks (16) **characterised in that** the closing mechanism (17) is positioned inside the medium storing tank (16) and it can stop the inlet of the tissue embedding medium and it has a lifting device (20) to lift out the tissue holding cassette (2) and a separating piece (21) being placed above the casting tank (14), the separating piece (21) having a cylindrical shape which is adapted to be fitted in to the V-form part of tissue holding cassette (2) to divide it into two halves of cassette (1), a half of cassette (1) containing the embedded tissue sample (11) and an empty half of cassette (1).

2. A procedure for using the embedding apparatus according to Claim 1 for embedding biological tissue samples wherein the tissue sample (11) is placed into one of the halves of cassette (1), the fastening insertion (13) is placed thereon, the two halves turned oppositely are joined, the tissue holding cassette (2) is placed into the casting tank (14), the liquid tissue embedding medium (12) is let into the casting tank (14) through the pass openings (15), then the flow of the tissue embedding medium is stopped by the closing mechanism (17), then the tissue embedding medium (12) in the tissue holding cassette (2) is hardened, **characterized by** that each tissue holding cassette (2) is inserted in its casting tank (14) and the embedded tissue holding cassette (2) is lifted to the separating piece (21) which separates it into two halves of cassette (1), into a half of cassette (1) containing the embedded tissue sample (11) and an empty half of cassette (1).

## Patentansprüche

1. Eine zum Einbetten biologischer Gewebeproben dienende Apparatur, die die Gewebeproben in aus zwei Kassettenhälften bestehende, eine V-Form bildende Kassette (2) einlegt, einen oder mehreren miteinander verbundenen das Medium aufbewahrenden mit Einlassrohr (19), Sperrmechanismus (17) und Wärmeaustauscher (18) versehenen Behälter (16) enthält, einen oder mehreren zur Aufnahme der gemeinten Kassette dienenden Gießbehälter (14) hat, worin jeder Gießbehälter (14) mit einem Wärmeaustauscher (18) versehen ist, mit Einlassöffnungen (15) versehen ist, um das die Gewebeproben einbettenden Medium (12) einzulassen, die Gießbehälter (14) über den das Medium aufbewahrenden Behältern (16) angeordnet sind, ***damit gekennzeichnet**, **dass*** das Sperrmechanismus (17) in den das Medium aufbewahrenden Behälter (16) eingebaut wird, das den Einlass des einbettenden Mediums stoppen kann und mit einem Heber (20) versehen wird, um die die Gewebeprobe enthaltende Kassette (2) auszunehmen, und ein Trennwerkzeug (21) über dem Gießbehälter (14) angeordnet wird, wo das Trennwerkzeug (21) zylindrisch ausgeformt wird, um in den V-Form bildenden Teil der die Gewebeprobe enthaltenden Kassette (2) anzupassen, um sie in zwei Hälften der Kassette (1) eine Kassettenhälfte (1) mit der eingebetteten Gewebeprobe (11) und eine leere Kassettenhälfte (1) zu trennen.

2. Ein Verfahren zur Verwendung der Apparatur nach dem Anspruch 1 zum Einbetten biologischer Gewebeproben, worin die Gewebeprobe (11) in eine der Kassettenhälften (1) gelegt wird, eine Befestigungseinlage (13) darauf gelegt wird, die zwei gegeneinander gerichteten Hälften gekoppelt werden, die Kassette in den Gießbehälter (14) gelegt wird und das flüssige einbettende Medium (12) in den Gießbehälter (14) durch die Einlassöffnungen (15) eingelassen wird, dann der Strom des einbettenden Mediums durch das Sperrmechanismus (17) gestoppt wird und das einbettende Medium (12) in der Kassette gehärtet wird, ***damit gekennzeichnet dass*** jede Gewebeprobe enthaltende Kassette (2) in den ihre Gießbehälter (14) gelegt wird und die eingebettete Gewebeprobe enthaltende Kassette (2) zum Trennwerkzeug (21) gehoben wird, das die Kassette in zwei Kassettenhälften (1) in eine die eingebettete Gewebeprobe (11) enthaltende Kassettenhälfte (1) und in eine leere Kassettenhälfte (1) trennt.

## Revendications

1. Un appareil pour l'inclusion les échantillons des tissus biologiques dans les cassettes contenants tissus (2) consistants en deux demi-cassettes composant une forme de V, où l'appareil a un ou plusieurs réservoirs (16) reliés entre eux contenants le véhicule d' inclusion et fournis de tuyau d'arrivée (19), d'un mécanisme de clôture (17) et d'un échangeur de chaleur (18), il a un ou plusieurs réservoirs à mouler (14) qui reçoivent les cassettes contenants tissus (2), chaque réservoir à mouler est fourni d'un échangeur de chaleur (18), ouvertures d'arrivée (15) pour laisser entrer le véhicule de l'inclusion (12), les réservoirs à mouler (14) sont aménagés au-dessus des réservoirs de véhicule de l'inclusion (16) ***caractérisé par que*** le mécanisme de clôture (17) est monté dans le réservoir de véhicule de l'inclusion (16) et il peut arrêter le coulage du véhicule et il est fourni d'un appareil élévateur (20) pour déboîter la cassette contenant tissu (2) et une pièce à séparer (21) montée au-dessus du réservoir à mouler (14), la pièce à séparer (21) a la forme cylindrique adaptée qui entre dans la pièce de forme de V de la cassette contenant tissu (2) pour la séparer en deux demi-cassettes (1) où une demi-cassette (1) contient l'échantillon de tissu (11) incluse et une demi-cassette (1) vide.

2. Une procédure pour l'emploi l'appareil pour l'inclusion selon la revendication 1 pour l'inclusion les échantillons des tissus biologiques où l'échantillon de tissu (11) est placée dans une des demi-cassettes (1) une insertion de fermeture (13) est placée ci-dessus les deux demi-cassettes (1) sont mises face à face et unies, la cassette contenant le tissu (2) est placée dans le réservoir à mouler (14) le véhicule liquide de l'inclusion (12) est laissé entrer dans le réservoir à mouler (14) par les ouvertures d'arrivée (15) ensuite l'écoulement du véhicule de l'inclusion (12) est arrêté par le mécanisme de clôture (17) ensuite le véhicule de l'inclusion (12) est solidifié dans la cassette contenant le tissu (2) ***caractérisé par que*** chaque cassette contenant le tissu (2) est insérée dans son réservoir à mouler (14) et la cassette contenant le tissu (2) incluse est levée à la pièce à séparer (21) que les sépare dans deux demi-cassettes (1), l'une d'entre eux contiens l'échantillon de tissu (11) incluse, l'autre demi-cassette est vide.
